## Europäisches Patentamt
## European Patent Office
## Office européen des brevets

(19)

(11) Veröffentlichungsnummer: **0 073 291**
**B1**

(12)

# EUROPÄISCHE PATENTSCHRIFT

(45) Veröffentlichungstag der Patentschrift:
**10.04.85**

(51) Int. Cl.⁴: **A 41 D 13/00**, B 62 J 33/00

(21) Anmeldenummer: **82103347.9**

(22) Anmeldetag: **21.04.82**

(54) Einrichtung zum Erwärmen von Personen, die insbesondere Kraftfahrzeuge fahren.

(30) Priorität: **29.05.81 DE 3121247**

(43) Veröffentlichungstag der Anmeldung:
**09.03.83 Patentblatt 83/10**

(45) Bekanntmachung des Hinweises auf die Patenterteilung:
**10.04.85 Patentblatt 85/15**

(84) Benannte Vertragsstaaten:
**BE CH FR GB IT LI LU NL SE**

(56) Entgegenhaltungen:
**DE - U - 8 027 178**
**DE - U - 8 027 524**
**DE - U - 8 031 329**
**FR - A - 2 436 063**
**FR - A - 2 437 973**

(73) Patentinhaber: **Roehr, Oskar W.K., Windmühlenstieg 15,
D-2000 Hamburg 52 (DE)**

(72) Erfinder: **Roehr, Oskar W.K., Windmühlenstieg 15,
D-2000 Hamburg 52 (DE)**

(74) Vertreter: **Richter, Joachim, Dipl.-Ing. et al,
Patentanwälte Richter u.Werdermann Neuer Wall 10,
D-2000 Hamburg 36 (DE)**

ACTORUM AG

## Beschreibung

Die Erfindung bezieht sich auf eine Einrichtung zum Erwärmen von Personen, die insbesondere Verbrennungskraftmaschinen aufweisende Krafträder oder Kraftfahrzeuge, wie offene Kraftfahrzeuge, oder Wasserfahrzeuge, schienengebundene Fahrzeuge, Arbeitsfahrzeuge, fahren oder auf Seeschiffen, schwimmenden Bohrinseln od. dgl. tätig sind, entsprechend dem ersten Teil des Anspruchs 1.

Beim Fahren von Krafträdern und offenen Kraftfahrzeugen besteht der Nachteil, dass die fahrenden Personen dem Fahrtwind ausgesetzt sind, wodurch die Gefahr gesundheitlicher Schädigungen durch Unterkühlung besteht. Um dies zu vermeiden, tragen derartige Personen besondere Bekleidungsstücke, die den Körper vollständig bedecken und windundurchlässig sind. Hierbei besteht der Nachteil, dass aufgrund der luftundurchlässigen Abschirmung der Körperoberfläche ein Feuchtigkeitsaustausch von der Körperhaut an die Umgebung nicht mehr möglich ist. Es tritt daher ein Feuchtestau ein, der regelmässig bereits nach relativ kurzer Fahrzeit eine partielle Durchfeuchtung der zwischen Körperoberfläche und der windundurchlässigen Bekleidung befindlichen Kleidungsstücke bewirkt, was neben körperlichem Unwohlsein die Gefahr von Erkältungskrankheiten begründet.

Hinzu kommt noch, dass insbesondere Rücken- und Brustpartie der fahrenden Person am ehesten unterkühlt werden, so dass es insbesondere leicht zu Schäden und Erkrankungen der Atemwege, der Lunge und der Nieren kommen kann. Die insbesondere von Motorradfahrern getragenen, eng anliegenden Schutzbekleidungsstücke ermöglichen keine ausreichende Luftzirkulation zwischen Träger und Bekleidungsstück, was zu einer Beeinträchtigung der Konzentration des Fahrers führen kann, der dadurch gezwungen ist, in immer grösserem Masse Fahrtpausen einzulegen, um sich durch Öffnen der Kleidung zu erfrischen.

Schutzbekleidungsstücke für z. B. im Freien und im Winter arbeitende Personen sind in den verschiedensten Ausführungsformen bekannt. So ist eine Schutzbekleidung, an der in Windungen verlaufende wärmeübertragende und flüssigkeitsdurchströmte Schläuche befestigt sind, bekannt geworden, bei der die Schläuche einzeln bzw. in Gruppen in aus Kanälen bestehenden Haltemitteln frei beweglich gehaltert sind. Da sich die Schläuche bei dieser bekannten Ausführungsform frei in den Haltemitteln bewegen können und das ganze Schlauchsystem infolge der gewundenen Anordnung der Schläuche bei Bewegungen des Trägers ziehharmonikaähnlich bewegbar ist, soll der Träger einer derartigen Schutzbekleidung die grösstmögliche Bewegungsfreiheit haben (DE-OS Nr. 1610647).

Es ist ferner ein heizbares, tuchartiges Erzeugnis sowie heizbarer Anzug aus derartigem Erzeugnis bekannt, welches in der Weise ausgebildet ist, dass gewebte Bereiche durch eingewebte Längenabschnitte flexibler Schläuche oder Rohre zur Führung eines strömungsfähigen Wärmeträgers voneinander getrennt sind, wobei sich die Rohre jeweils ausschliesslich in einer Richtung des gewebten Erzeugnisses erstrecken und abwechselnd auf der Oberseite und auf der Unterseite des Erzeugnisses einzelne Garne bzw. Fäder oder Gruppen von Garnen bzw. Fäden quer über die Rohre verlaufen, wobei sich die Rohre in Richtung der Kettfäden erstrecken, die vergleichsweise undehnbar, dagegen die Schussfäden vergleichsweise hochdehnbar ausgebildet sind. Da die Rohre oder Schläuche aufgrund der besonderen Ausbildung dieses bekannten Erzeugnisses, aus welchem der Anzug gebildet ist, dicht am Körper des Trägers anliegen, soll eine unmittelbare Wärmeübertragung vom zirkulierenden Wärmeträger zum Rumpf durch Wärmeleitung stattfinden. Ein derart ausgebildeter Anzug ist insbesondere als Unterbekleidungsstück für Schwimm- oder Tauchanzüge vorgesehen (DE-OS Nr. 1908742).

Durch das DE-U Nr. 8027178.9 ist ein Bekleidungsstück zur Erwärmung von Personen, die Verbrennungskraftmaschinen aufweisende Krafträder oder Kraftfahrzeuge, insbesondere offene Kraftfahrzeuge, oder Wasserfahrzeuge oder schienengebundene Fahrzeuge, insbesondere Arbeitsfahrzeuge, fahren, bekannt, wobei in diesem Bekleidungsstück ein warmluftführendes Kanalsystem mit Luftdurchtrittsöffnungen an der das Bekleidungsstück tragenden Person zugewandten Seite und mit Abluftöffnungen ausgebildet ist, das mit einer flexiblen Warmluftzuführungs- und Anschlussleitung verbunden ist, und das aus einer äusseren Schale und einer inneren Schale besteht, die abschnittsweise miteinander unter Ausbildung von Luftkanälen verbunden sind. Mit einem derart ausgebildeten Bekleidungsstück ist es möglich, Personen, die dieses Bekleidungsstück tragen, durch Warmluftzuführung in das im Innenraum des Bekleidungsstückes ausgebildeten Kanalsystems zu erwärmen, wobei eine Warmlufterzeugungseinrichtung für die Erzeugung der Warmluft vorgesehen ist, die durch die Abwärme des Motors des Fahrzeuges oder von einem Elektroheissluftgebläse erzeugt wird. Die Regelung der Temperatur der zugeführten Warmluft erfolgt mittels eines Absperrventils, welches als Steuerorgan ausgebildet ist, um die jeweils gewünschte Erwärmungstemperatur einstellen zu können. Der Anschluss der Warmlufterzeugungseinrichtung über die flexible Leitung an das Bekleidungsstück kann mittels entsprechend ausgebildeter Anschlusselemente erfolgen.

Ein Bekleidungsstück zur Erwärmung von Personen, die Verbrennungskraftmaschinen aufweisende Krafträder oder Kraftfahrzeuge, insbesondere offene Kraftfahrzeuge, oder Wasserfahrzeuge oder schienengebundene Fahrzeuge, insbesondere Arbeitsfahrzeuge, fahren, welches für eine Warmluftzuführung zum Bekleidungsstück mit einer Warmlufterzeugungseinrichtung in Verbindung steht, ist durch die DE-U Nr. 8027524.7 bekannt. Zur Erzeugung der Warmluft ist eine mit der Abwärme der Verbrennungskraftmaschine gespeiste oder verbrennungskraftmaschinenunabhängige Warmlufterzeugungseinrichtung vorgesehen, an deren Lufteinlass ein Gebläse angeordnet ist, welches mit einer Fördermengenregeleinrichtung versehen sein kann. Diese Warmlufterzeugungseinrichtung ist dabei als mit einem Abgasrohr der Verbrennungskraftmaschine verbundener Wärmeaustausch ausgebildet, der mit einem konischen Lufteinlass versehen ist, in dem das Gebläse angeordnet ist. Bei dieser Personenerwärmungsvorrichtung wird ausschliesslich Warmluft erzeugt und dem Bekleidungsstück zugeführt. Eine Kaltluftzuführung ist nicht vorgesehen, so dass die gesamte Vorrichtung nur in kälteren Jahreszeiten und nicht bei warmen Aussentemperaturen verwendet werden kann. Auch ermöglicht die bekannte Warmlufterzeugungsvorrichtung keine Regulierung der Temperatur der zugeführten Warmluft. Lediglich eine Fördermengenregulierung ist möglich. Ausserdem ist das Gebläse im Lufteinlassbereich der als Wärmeaustauscher ausgebildeten Warmlufterzeugungseinrichtung angeordnet. Wird die Warmluftzuführung beispielsweise bei Fahrten im Sommer unterbrochen, dann fällt das Bekleidungsstück in sich zusammen und kann daher nicht als zusätzliches Polster dienen, um den gestürzten Kraftradfahrer vor Verletzungen, Prellungen u. dgl. zu schützen.

Ein speziell ausgestaltetes Bekleidungsstück zum Erwärmen von Personen ist ferner dem DE-U Nr. 8031329.7 zu entnehmen. Hier ist das Bekleidungsstück doppelwandig ausgebildet und besteht aus einer inneren Lage und einer äusseren Lage aus schweissbarer Kunststoffolie oder einem mit einer Kunststoffolie kaschiertem Gewebe, wobei die beiden Lagen unter Ausbildung eines geschlossenen Innenraumes randverschweisst sind und unter Ausbildung eines warmluftführenden Kanalsystems aus einer Vielzahl von miteinander verbundenen luftkanalartigen Abschnitten abschnittsweise bzw. punktartig miteinander verschweisst sind, wobei eine der beiden Lagen mit einem in den Innenraum mündenden Warmluftzuführungsstutzen verbunden ist, während die dem Träger des Bekleidungsstückes zugewandte innere Lage des Bekleidungsstückes Luftaustrittsöffnungen aufweist. Die Zuführung von Warmluft erfolgt auch bei diesem Bekleidungsstück mit einer entsprechend ausgebildeten Warmlufterzeugungseinrichtung. Soweit Warmlufterzeugungseinrichtungen für Bekleidungsstücke verwendet werden, die Personen erwärmen sollen, handelt es sich um Heissluftgebläse oder um Wärmeaustauscher, die an die Auspuffanlage eines Fahrzeuges angeschlossen werden. Eine Regelung sowohl der Warmluftzufuhr als auch der Kaltluftzufuhr ist bei diesen bekannten Warmlufterzeugungseinrichtungen nicht vorgesehen; ebenso auch nicht die Möglichkeit, derartige Warmlufterzeugungseinrichtungen als Bauelement in bestehende Auspuffanlagen mühelos einbauen zu können.

Hier will die Erfindung Abhilfe schaffen. Die Erfindung löst die Aufgabe, eine Einrichtung, bestehend aus einem Bekleidungsstück zum Erwärmen von Personen und einer Warmlufterzeugungseinrichtung, zu schaffen, die einen mühelosen Einbau in bestehende Auspuffanlage einer Verbrennungskraftmaschine und auch noch einen nachträglichen Einbau ohne geschulte Fachkräfte auf kleinstem Raum ermöglicht.

Zur Lösung dieser Aufgabe sieht die Erfindung eine Einrichtung zum Erwärmen von Personen, die insbesondere Verbrennungskraftmaschinen aufweisende Krafträder oder Kraftfahrzeuge, wie offene Kraftfahrzeuge, oder Wasserfahrzeuge, schienengebundene Fahrzeuge, Arbeitsfahrzeuge, fahren oder auf Seeschiffen, schwimmenden Bohrinseln od. dgl. tätig sind, vor; wie sie im zweiten Teil des Anspruchs 1 gekennzeichnet ist.

Eine derart ausgebildete Warmlufterzeugungseinrichtung stellt eine Baueinheit dar, die mühelos in bereits bestehende Auspuffanlagen von Verbrennungskraftmaschinen einbaubar ist und die auch bei einem Neubau gleichzeitig mit in eine Auspuffanlage integriert werden kann. Für den Einbau ist es lediglich erforderlich, dass der vorhandene Auspuffkrümmer oder die Auspuffleitung abmontiert und dafür der gebogene oder gerade Auspuffleitungsabschnitt mit der Warmlufterzeugungseinrichtung eingebaut wird. Dadurch, dass die Warmlufterzeugungseinrichtung dem Wärmeaustauscher und dem Kaltluftansaugstutzen nachgeschaltet ein Saug/Druck-Gebläse aufweist, ist ein einwandfreies Regulieren einmal der dem Bekleidungsstück zuzuführenden Warmluft möglich und zum anderen ist die Temperatur der dem Bekleidungsstück zuzuführenden Warmluft steuerbar, so dass es in keiner Weise zu irgendwelchen Erhitzungen im Bekleidungsstück kommt. Ist darüber hinaus zwischen dem Wärmeaustauscher und der Kaltlufteintrittsöffnung vor dem Gebläse ein Absperrventil vorgesehen, so ist die Möglichkeit gegeben, dem Bekleidungsstück über das Gebläse nur Kaltluft zuzuführen, falls dies gewünscht werden sollte.

Durch die Verwendung eines Saug/Druck-Gebläses in der Warmlufterzeugungseinrichtung ergibt sich noch ein weiterer Vorteil. Dadurch, dass die Warmluft oder die Kaltluft mittels eines Gebläses in den Inneraum zwischen den beiden Lagen des Bekleidungsstückes eingeblasen wird, wird trotz des teilweisen Ableitens der zugeführten Warmluft oder Kaltluft durch die Luftableitungsschlitze im Innenraum des Bekleidungsstückes ein gleichmässiger Druck an Warmluft oder Kaltluft ausgebildet und auch ständig aufrechterhalten, so dass sich einerseits das Bekleidungsstück nicht unnatürlich aufbläht und zum anderen das Bekleidungsstück als Schutz bei Stürzen eines Motorradfahrers insofern dient, als durch den Aufbau des Luftpolsters in dem Innenraum des Bekleidungsstückes Stürze gemindert und Verletzungen, Prellungen od. dgl. der dieses Kleidungsstück tragenden Person vermieden werden.

Weitere vorteilhafte Weiterentwicklungen der Erfindung gehen aus den Unteransprüchen hervor.

Im folgenden wird die Erfindung anhand eines in den Zeichnungen dargestellten Ausführungsbeispiels der Warmlufterzeugungseinrichtung näher erläutert. Es zeigen

Fig. 1 in einer schematischen Ansicht die aus einem Bekleidungsstück und einer Warmlufterzeugungseinrichtung bestehende Gesamteinrichtung zum Erwärmen von Personen,

Fig. 2 in einer schematischen Ansicht die Gesamteinrichtung zum Erwärmen von Personen mit einem andersartig ausgebildeten Bekleidungsstück,

Fig. 3 einen vergrösserten, waagerechten Schnitt gemäss Linie III-III in Fig. 2,

Fig. 4 in einer schematischen Darstellung einen Abschnitt des Bekleidungsstückes mit zwei luftkanalartigen Abschnitten und den Luftaustrittsdurchbrechungen, und

Fig. 5 teils in Ansicht, teils in einem senkrechten Schnitt den an das Bekleidungsstück angeschlossenen Warmluftzuführungsstutzen.

Die Gesamteinrichtung zum Erwärmen von Personen besteht aus einer Warmlufterzeugungseinrichtung 400 und einem an diese angeschlossenen Bekleidungsstück 3 bzw. 210, in das die von der Warmlufterzeugungseinrichtung 400 erzeugte Warmluft einführbar ist.

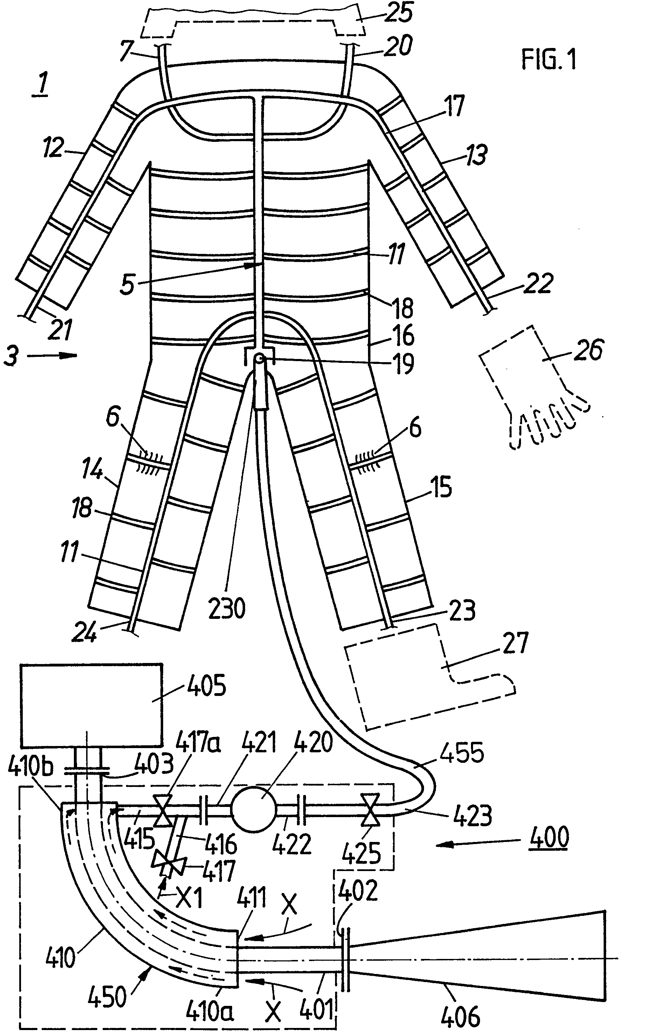

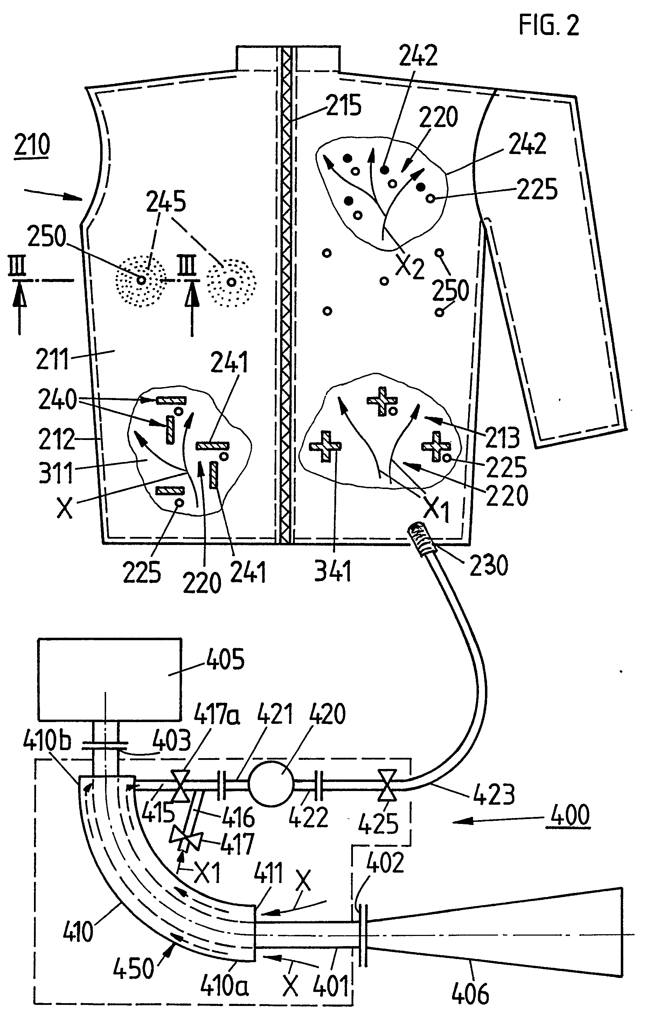

Die in Fig. 1 und 2 dargestellte Warmlufterzeugungseinrichtung 400 besteht aus einem gekrümmten oder geraden Auspuffleitungsabschnitt 401, der beidendseitig Anschlusseinrichtungen 402, 403 aufweist, mittels denen der Auspuffleitungsabschnitt 401 an den motorseitigen Abgasauslassstutzen und an den Auspufftopf 406 anschliessbar ist. Der Motor ist in der Zeichnung schematisch bei 405 angedeutet.

Auf dem Auspuffleitungsabschnitt 401 ist ein in an sich bekannter Weise ausgebildeter Wärmeaustauscher 450 angeordnet, dessen Mantelrohr 410 den Auspuffleitungsabschnitt 401 umgibt. An seinem dem Auspufftopf 406 gegenüberliegenden Ende 410a weist der Wärmeaustauscher 450 eine Kaltlufteintrittsöffnung 411 auf, über die in Pfeilrichtung X Kaltluft eingesogen wird. Im Bereich des oberen Endes 410b weist dagegen der Wärmeaustauscher 450 einen Warmluftaustrittsstutzen 415 auf, durch den die durch den Wärmeaustauscher 450 strömende erwärmte Luft vermittels des nachgeschalteten Gebläses 420 dem mit 2 bzw. 210 bezeichneten Bekleidungsstück zugeleitet wird. In der Zuführungsleitung von dem Wärmeaustauscher 450 zu dem Gebläse 420 ist ein Kaltluftansaugstutzen 416 angeordnet, der mit einem Ventil 417 zur Mengenregelung der in Pfeilrichtung X1 angesogenen Kaltluft dient. Der Warmluftaustrittsstutzen 415 des Wärmeaustauschers 450 ist an den bei 421 angedeuteten Gebläseansaugstutzen angeschlossen. Der Gebläsedruckstutzen 422 ist mit einem Rohrabschnitt 423 verbunden, in den ein Regelventil 425 zur Druckregelung eingeschaltet ist. An diesen Rohrabschnitt 423 schliesst sich ein flexibler Anschlussschlauch 455 an, der mit dem Bekleidungsstück 3 bzw. 210 verbunden ist, in das zur Erwärmung die Warmluft eingeführt wird. Dieses Bekleidungsstück 3 bzw. 210 ist jackenartig oder ärmellos ausgebildet; es kann jedoch auch mit Ärmeln versehen sein. Vorderseitig erfolgt das Schliessen des Bekleidungsstückes mittels eines Reissverschlusses, jedoch auch andere Verbindungsmittel, wie Knopfleiste, Druckknopfleiste u. dgl., können zur Anwendung gelangen.

In das in Fig. 1 dargestellte Bekleidungsstück 3 ist ein Kanalsystem 5 integriert. Dieses Kanalsystem 5 ist mittels der flexiblen Leitung 455 mit der Warmlufterzeugungseinrichtung 400 verbunden. Die flexible Leitung 455 der Warmlufterzeugungseinrichtung 400 ist an einem bekleidungsstückseitig vorgesehenen Anschlussstück 230 befestigt, das mit dem Kanalsystem 5 des Bekleidungsstückes 3 verbunden ist.

In dem Bekleidungsstück 3 ist ein Hauptkanal 17 ausgebildet, der sich von dem Anschlussstück 19 durch das Mittelteil 16 sowie die Armteile 12, 13 und die Beinteile 14, 15 des Bekleidungsstückes 3 erstreckt. Etwa rechtwinklig zu dem Hauptkanal 17 sind in Abständen voneinander Verteilungskanäle 18 ausgebildet, die zum Körper der das Bekleidungsstück 3 tragenden Person ausgerichtete Luftdurchtrittsöffnungen 6 aufweisen.

An dem Bekleidungsstück 3 sind ferner Anschlussstücke 20, 21, 22, 23, 24 vorgesehen, die zur Verbindung des Kanalsystems 5 mit einem Helm 25, Handschuhen 26 und Stiefeln 27 dienen. Die Verbindung kann durch nicht näher dargestellte kurze flexible Leitungsabschnitte erfolgen.

Das Kanalsystem 5 kann in dem Bekleidungsstück 3 verschiedenartig ausgebildet sein. So ist es möglich, das Bekleidungsstück 3 aus einer äusseren und einer inneren Lage herzustellen, wobei beide Lagen abschnittsweise miteinander unter Ausbildung von Luftkanälen verbunden sind. Die zwischen den Lagen angeordneten Verbindungsstege können unterschiedliche Abstände voneinander haben. Es ist auch möglich, das Kanalsystem 5 schlauchartig an der Innenseite des Bekleidungsstückes 3 auszubilden. Der Austritt der dem Bekleidungsstück 3 zugeführten Luft erfolgt über Abluftöffnungen 7.

Das in Fig. 2 dargestellte Bekleidungsstück 210 ist jackenartig ausgebildet; es kann ärmellos ausgebildet oder mit Ärmeln versehen sein. Vorderseitig erfolgt das Schliessen des Bekleidungsstückes mittels eines bei 215 angedeuteten Reissverschlusses.

Das Bekleidungsstück 210 ist doppelwandig ausgebildet und besteht aus zwei Lagen, einer äusseren Lage 211 und einer inneren Lage 311, wobei letztere die dem Körper des Trägers des Bekleidungsstückes zugewandte Seite darstellt. Die beiden Lagen 211, 311 bestehen aus schweissbarer Kunststoffolie oder aus einem mit einer Kunststoffolie kaschiertem Gewebe.

Die beiden Lagen 211, 311 sind unter Ausbildung eines geschlossenen Innenraumes 213 bei 212 randverschweisst. In diesem Innenraum 213 ist ein warmluftführendes Kanalsystem 220 ausgebildet, das aus einer Vielzahl von miteinander verbundenen luftkanalartigen Abschnitten 221 gebildet ist. Diese luftkanalartigen und zusammenhängenden Abschnitte 221 werden gebildet von einer abschnittsweisen oder punktartigen Verschweissung der beiden Lagen 211 und 311 miteinander. Da die beiden Lagen 211, 311 des Bekleidungsstückes 210 aus schweissbarer Kunststoffolie oder aus einem mittels einer schweissbaren Kunststoffolie kaschierten Gewebe besteht, ist ein abschnittsweises Verschweissen der beiden Lagen 211, 311 mühelos möglich.

Die mit 240 bezeichneten Schweissabschnitte sind so angebracht, dass ein zusammenhängendes warmluftführendes Kanalsystem 220 gebildet ist.

Das abschnittsweise Verschweissen der beiden Lagen 211, 311 des Bekleidungsstückes 210 kann punktartig erfolgen, wie dies in Fig. 2 bei 242 angedeutet ist. Diese punktartigen Schweissstellen sind dann in etwa säulenartig ausgebildet. Fig. 2 zeigt jedoch auch andersartig ausgebildete Schweissabschnitte 240, die beispielsweise stegförmig ausgebildet und bei 241 angedeutet sind. Diese stegartigen Verschweissungsabschnitte 240 sind zueinander versetzt angeordnet, so dass die durch den Innenraum 213 des Bekleidungsstückes 210 geführte Luft in Pfeilrichtung X, X1 und X2 strömen kann. Die Schweisssstege 241 können jedoch auch kreuzartig ausgebildet sein, wie dies bei 341 in Fig. 2 angedeutet ist. Auch hier ist vorteilhafterweise eine versetzte Anordnung und Zuordnung der Kreuzstege vorgesehen.

Die Zufuhr von Warmluft in den Innenraum 213 des Bekleidungsstückes 210 erfolgt über einen Warmluftzuführungsstutzen 230, an den die flexible Schlauchleitung 455 der Warmlufterzeugungseinrichtung 400 angeschlossen ist. Der Anschluss des Warmluftzuführungsstutzens 230 an eine der beiden Lagen 211, 311 des Bekleidungsstückes 210 ist in Fig. 5 dargestellt. Hier erfolgt der Anschluss des Warmluftzuführungsstutzens 230 an den Innenraum 213 des Bekleidungsstückes 210 im Bereich seiner äusseren Lage 211, jedoch auch ein Anschluss an der inneren Lage 311 des Bekleidungsstückes kann vorgesehen sein. Die Zuführung der Warmluft durch den Warmluftzuführungsstutzen 230 erfolgt in Pfeilrichtung Y (Fig. 5).

Um im Einströmungsbereich der Warmluft in den Innenraum 213 des Bekleidungsstückes 210 eine zu starke Erwärmung der Kunststoffolienlage zu vermeiden, die dem Warmluftzuführungsstutzenanschlussbereich gegenüberliegt, weist nicht nur die Innenwandfläche der Lage 311 eine Isolierbeschichtung 235 auf, sondern auch an der Innenwandfläche der äusseren Lage 211 im Anschlussbereich 211a des Zuführungsstutzens 230 ist eine Isolierbeschichtung 235 vorgesehen (Fig. 5). Diese Isolierbeschichtungen 235 können so ausgebildet sein, dass sie gleichzeitig versteifend wirken, so dass ein Zusammendrücken der sich gegenüberliegenden Wandflächen der beiden Lagen 211, 311 im Anschlussbereich 211a des Warmluftzuführungsstutzens 230 vermieden wird, so dass die Warmluftzufuhr in keiner Weise bei derartigen Situationen beeinträchtigt wird. Zur Abstandshaltung der beiden Wandflächen der Lagen 211, 311 kann die eine der beiden Isolierbeschichtungen mit einer Abstandsprofilierung 235a versehen sein, so dass auch bei einem Zusammenpressen der beiden Lagen 211, 311 ein Durchströmen der Warmluft aus dem Warmluftzuführungsstutzen 230 in den Innenraum 213 des Bekleidungsstückes 210 gewährleistet ist.

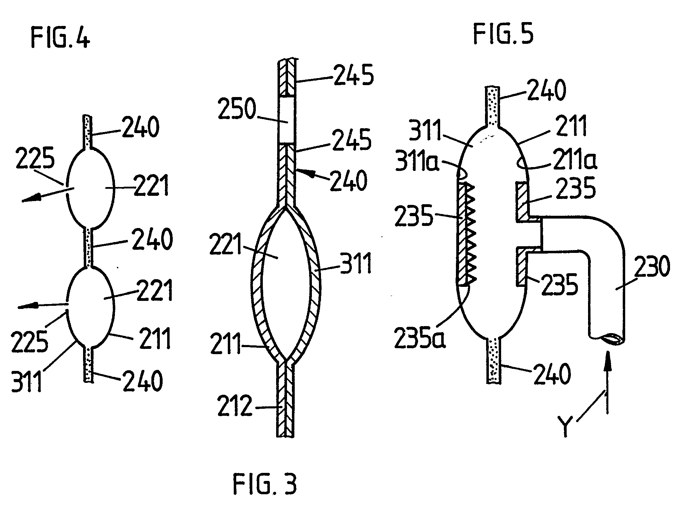

Um die in den Innenraum 213 des Bekleidungsstückes 210 zugeführte Warmluft den vom Bekleidungsstück bedeckten Körperstellen des Trägers dieses Bekleidungsstückes zuführen zu können, weist die innere Lage 311 des Bekleidungsstückes 210 im Bereich der luftkanalartigen Abschnitte 221 Luftaustrittsöffnungen 225 auf, die über die gesamte Fläche der Lage 311 verteilt sind. Um den Luftaustritt durch die Luftaustrittsöffnungen 225 in keiner Weise zu schmälern, sind die Luftaustrittsöffnungen 225 benachbart bzw. im Bereich der Schweissabschnitte 240 vorgesehen, die darüber hinaus noch als Versteifungsstege ausgebildet sein können (Fig. 4).

Um einen Luftausgleich zwischen den zu erwärmenden Körperstellen und dem angelegten Bekleidungsstück 210 mit der Aussenluft zu ermöglichen, sind nach einer weiteren Ausführungsform gemäss Fig. 2 und 3 in den Verbindungsbereichen der Schweissabschnitte 240 Durchbrechungen 250 vorgesehen, die im Bereich dieser Schweissabschnitte 240 derart ausgebildet sind, dass benachbart zu den einzelnen Durchbrechungen 250 geschlossene, ringförmige Schweissstellen 245 beibehalten werden, so dass die Wirkungsweise der vorgesehenen Schweissabschnitte 240 aufrechterhalten wird, jedoch gleichzeitig unter Ausbildung von Belüftungs-/Durchluftungsöffnungen, so dass es in dem Innenraum zwischen dem angelegten Bekleidungsstück und dem Körper zu keinem Feuchtestau kommen kann.

Bei dem Bekleidungsstück 210 erstreckt sich die Doppelwandigkeit über das gesamte Bekleidungsstück und, wenn Arm- und Beinteile vorgesehen sind, auch auf diese. Ein Aufblaseffekt wird durch die Schweissabschnitte 240 bzw. 241 bzw. 242 vermieden, die die beiden Folien der inneren und äusseren Lage 211, 311 des Bekleidungsstückes verbinden. Die in den Innenraum 213 des Bekleidungsstückes 210 eingeblasene Warmluft kann sich trotz dieser Schweissabschnitte 240 über den gesamten Innenraum 213 des Bekleidungsstückes 210 ausbreiten und hat durch die vorgesehenen Luftaustrittsöffnungen 225 die Möglichkeit, die mit dem Bekleidungsstück 210 bedeckten Körperstellen zu erwärmen. Die Anordnung und Zuordnung der die beiden Folienlagen 211 und 311 miteinander verbindenden Schweissabschnitte 240 ist derart, dass sich einzelne Abschnitte des Bekleidungsstückes 210 beim Einblasen der Warmluft nicht blasenförmig erweitern können.

Das für die Herstellung des Bekleidungsstückes 210 verwendete Material ist luftundurchlässig und wasserdicht. Die Schwitzwasserbildung des Trägers des Bekleidungsstückes wird durch die dem Körper zugeführte Warmluft und Ableitung durch die Durchbrechungen 250 verringert bzw. ganz vermieden. Ist die Luftzuführung unterbrochen, z.B. bei Beendigung der Fahrt des Trägers eines derartigen Bekleidungsstückes, so könnte es zu einer Schweissbildung kommen, die jedoch aufgrund der verwendeten Durchbrechungen 250 vermieden wird. Auch wenn das Bekleidungsstück unter der normalen Kleidung getragen wird, lässt sich ein Luftausgleich, Temperaturausgleich und eine Luftzirkulation mittels der Durchbrechungen 250 erreichen. Die in den Schweissabschnitten 240 vorgesehenen Durchbrechungen 250 können sowohl kreisförmig als auch viereckig ausgebildet sein. In diesem Bereich sind dann die Schweissabschnitte in entsprechender Weise ausgebildet, so dass benachbart zu jeder Durchbrechung 250 eine ringförmige Schweissstelle 245 aufrechterhalten wird.

Ein derart ausgebildetes Bekleidungsstück 210 ist sehr preiswert herstellbar, da es lediglich nur aus zwei abschnittsweise miteinander verbundenen Kunststoffolien besteht und von einem zusätzlichen wärmeisolierenden Material, wie Futter od. dgl., abgesehen werden kann. Das warmluftführende Kanalsystem 220 ist auch dann funktionsfähig, wenn Teile des Kanalsystems abgeklemmt werden, z. B. bei Benutzung des Bekleidungsstückes beim Sitzen mit einer Rückenlehne. Die Luftführung im Innenraum 214 des Bekleidungsstückes 210 wird dann in den abgeklemmten Abschnitten des Bekleidungsstückes unterbrochen, jedoch die weitere Warmluftzuführung im übrigen Bereich des Innenraumes 213 in keiner Weise beeinträchtigt.

Ist das Bekleidungsstück 210 als Innenteil ausgebildet, dann kann es in an sich bekannter Weise mit in der Zeichnung nicht dargestellten Verbindungseinrichtungen versehen sein, um das Innenteil beispielsweise innenfutterartig in einem Bekleidungsstück, wie Jacke, Parka, Mantel od. dgl., befestigen zu können. Als Befestigungseinrichtung können Druckknopfbefestigungen oder Reissverschlüsse oder andere geeignete Verbindungsmittel Verwendung finden.

Ebenso wie das Bekleidungsstück 210 kann auch das Innenteil mit Ärmeln versehen sein. Die Ärmel sind dann ebenfalls entsprechend dem Bekleidungsstück 210 ausgebildet.

Da die unter leichtem Druck eingeströmte Warmluft das Kanalsystem aufbläht, kann ein derart aufgeblasenes Bekleidungsstück gleichzeitig zum Schutz des Trägers dienen, wenn dieser beispielsweise mit seinem Kraftrad stürzt.

**Patentansprüche**

1. Einrichtung zum Erwärmen von Personen, die insbesondere Verbrennungskraftmaschinen aufweisende Krafträder oder Kraftfahrzeuge, wie offene Kraftfahrzeuge, oder Wasserfahrzeuge, schienengebundene Fahrzeuge, Arbeitsfahrzeuge, fahren oder auf Seeschiffen, schwimmenden Bohrinseln od. dgl. tätig sind, bestehend aus einem Bekleidungsstück (3), wie Jacke, Parka, Overall, Mantel od. dgl., das mit einem warmluftführenden Kanalsystem (5) aus einer Vielzahl von Luftkanälen (11, 18) mit Luftaustrittsöffnungen (6) an der der das Bekleidungsstück tragenden Person zugeordneten Seite und mit Abluftöffnungen (7) versehen und das doppellagig ausgebildet ist, wobei die beiden Lagen des Bekleidungsstükkes zur Ausbildung der Luftkanäle abschnittsweise miteinander verbunden sind und aus luftundurchlässigem, wärmestabilem Werkstoff, insbesondere Kunststoffolie, bestehen, und aus einer mit der Abwärme der Verbrennungskraftmaschine (405) gespeisten Warmlufterzeugungseinrichtung (400), die über einen Anschlussschlauch (455) mit dem Bekleidungsstück (3) verbunden ist, die mit Steuereinrichtungen zur Regelung der Temperatur der dem Bekleidungsstück zugeführten Warmluft und mit einem Gebläse versehen ist, wobei die Warmlufterzeugungseinrichtung (400) aus einem gebogenen oder geradem Auspuffleitungsabschnitt (401) mit beidendseitig ausgebildeten Anschlusseinrichtungen (402, 403) und mit einem Wärmeaustauscher (450) aus einem den Auspuffleitungsabschnitt (401) umgebenden Mantelrohr (410) besteht, dadurch gekennzeichnet, dass das Mantelrohr (410) einendseitig (410a) mit einer Kaltlufteintrittsöffnung (410) versehen ist und an seinem anderen Ende (410b) einen Warmluftaustrittsstutzen (415) aufweist, in den ein Kaltluftansaugstutzen (416) mündet, dass zwischen dem Warmluftaustrittsstutzen (415) und dem Anschlussschlauch (455) das Gebläse (420) angeordnet ist, dessen Saugstutzen (421) an den Warmluftaustrittsstutzen (415) angeschlossen und dessen Druckstutzen (422) mit einem Regelventil (425) versehen ist, der den flexiblen, zum Bekleidungsstück (3) führenden Anschlussschlauch (455) trägt, und dass der Kaltluftansaugstutzen (416) mit einem Regelventil (417) versehen ist.

2. Einrichtung nach Anspruch 1, dadurch gekennzeichnet, dass in dem Rohrabschnitt (415) zwischen dem Wärmeaustauscher (450) und dem Kaltluftansaugstutzen (416) ein Absperrventil (417a) angeordnet ist.

**Claims**

1. Device for warming persons, particularly those driving motor vehicles or motorcycles having internal combustion engines, such as motor vehicles or watercraft, tracked vehicles, working vehicles, or who are working on oceangoing ships, floating drilling platforms, etc., comprising an article of clothing (3) such as a jacket, parka, overall, overcoat, etc., which is constructed in double-layered manner with a hot air carrying duct system (5) formed from a plurality of air ducts (11, 18) with air outlet (6) on the side associated with the person wearing the article of clothing and with spent air openings (17), the two layers of the article of clothing being zonally interconnected for forming the air ducts and made from air-impermeable, thermally stable material, particularly plastic sheeting, and a hot air producing device (400) supplied with waste heat from the internal combustion engine (405) and which is connected by means of a connecting hose (455) to the article of clothing (3), which is provided with control means for regulating the temperature of the hot air supplied to the article of clothing and with a blower, in which the hot air producing device (400) is formed from a bent or straight exhaust pipe section (401), with connecting devices (402, 403) constructed at both ends and a heat exchange (450) comprising a casing (410) surrounding the exhaust pipe section (401), characterized in that the casing (410) is provided at one end (410a) with a cold air inlet (410) and at its other end (410b) has a hot air outlet connection (415), in which is provided a cold air suction connection (416), and that between the hot air outlet connection (415) and the connecting hose (455) a blower (420) is provided, whose suction connection (421) is connected to the hot air outlet connection (415) and whose pressure connection (422) is provided with a control valve (425), which carries the flexible connecting hose (455) leading to the article of clothing (3), and that the cold air suction connection (416) is provided with a control valve (417).

2. Device according to Claim 1, characterized in that a shut-off valve (417a) is provided in the pipe section (415) between the heat exchanger (450) and the cold air suction connection (416).

**Revendications**

1. Dispositif de réchauffement, en particulier pour les personnes conduisant des motocycles ayant un moteur à combustion interne ou des véhicules ouverts à moteur, des navires, des véhicules roulant sur rails, des véhicules de travail, ou pour les personnes travaillant sur des navires de haute mer, des barges de forage ou similaires, se composant d'un vêtement (3), tel que veste, parka, combinaison, manteau ou similaire, qui est muni d'un système de conduits d'air chaud (5) comprenant une multitude de conduits d'air (11, 18), avec des orifices d'échappement d'air (6) disposés du côté dirigé vers la personne portant le vêtement et des orifices d'évacuation (7), et exécuté à double couche, ces deux couches du vêtement étant reliées l'une l'autre par des sections formant ainsi les conduits d'air et consistant en un matériau imperméable à l'air et résistant à la chaleur, en particulier une feuille de matière plastique, et d'un dispositif de production d'air chaud (400) alimenté par l'air chaud sortant du moteur (405) à combustion interne, ce dispositif étant relié au revêtement (3) par l'intermédiaire d'un tuyau de raccordement (455) et muni d'un dispositif de contrôle pour le réglage de la température de l'air chaud alimenté dans le vêtement et d'un ventilateur, le dispositif de production d'air chaud (400) se composant d'une section de conduite d'échappement (401) coudée ou droite, avec des dispositifs de raccordement (402, 403) sur les deux côtés et avec un appareil d'échange de chaleur (450) consistant en un tube de protection (410) entourant la section de conduite d'échappement (401), caractérisé en ce que le tube de protection (410) est muni, d'un côté (410a), d'un orifice d'alimentation en air froid (410) et, de l'autre côté (410b), d'une tubulure d'échappement d'air chaud (415) dans laquelle embouche la tubulure d'aspiration de l'air froid (416) et que, entre la tubulure d'échappement d'air chaud (415) et le tube de raccordement (455), est disposé le ventilateur (420), dont la tubulure d'aspiration (421) est raccordée à la tubulure d'échappement d'air chaud (415) et dont le tuyau de refoulement (422) est muni d'une soupape de réglage (425) qui porte le tube flexible de raccordement dirigé vers le vêtement (3), et que la tubulure d'aspiration de l'air chaud (416) est munie d'une soupape de réglage (417).

2. Dispositif suivant la revendication 1, caractérisé en ce que la section des tubes (415) est munie d'une soupape d'arrêt (417a) entre l'appareil d'échange de chaleur (450) et la tubulure d'aspiration d'air froid (416).

0 073 291

FIG.1

0 073 291

FIG. 2

FIG.4

FIG.5

FIG. 3